# FASCICULE DE BREVET EUROPEEN

(11) **EP 0 530 114 B1**
(45) Date de publication et mention de la délivrance du brevet: **31.01.1996**
(21) Numéro de dépôt: 92420256.7
(22) Date de dépôt: 30.07.1992
(51) Int. Cl.: B66C 23/28, E04H 12/10, F16B 21/12

(54) **Dispositif d'assemblage démontable pour éléments de charpente métallique**
Lösbare Verbindungsvorrichtung für metallische Gerüstelemente
Dismountable assembly device for metallic framework elements

(30) Priorité: 30.08.1991 FR 9110948
(43) Date de publication de la demande: 03.03.1993
(73) Titulaire: POTAIN, F-69130 Ecully (FR)
(72) Inventeur: Millet, Yves, F-03000 Moulins (FR)
(74) Mandataire: Bratel, Gérard

(56) Documents cités:
- EP-A- 0 208 037
- DE-A- 3 936 257
- FR-A- 1 270 056
- FR-A- 1 436 649
- FR-A- 2 135 024
- FR-A- 2 643 950
- US-A- 1 424 008
- US-A- 3 371 458
- US-A- 3 395 501
- US-A- 3 511 388

## Description

La présente invention concerne un dispositif d'assemblage démontable, destiné à assurer une liaison entre des éléments de charpente métallique. Cette invention trouve notamment son application dans la liaison des éléments de mât constituant la tour verticale réhaussable des grues à tour, utilisées sur les chantiers de construction de bâtiments.

La tour d'une telle grue est généralement constituée d'éléments superposables, appelés à être fréquemment assemblés entre eux et séparés les uns des autres ; ces éléments sont conçus, en ce qui concerne le choix de leur longueur, pour faciliter le transport de la grue à l'état démonté et pour permettre l'adaptation de la hauteur de la grue à ses conditions d'utilisation sur les chantiers.

Les éléments de mât, généralement de section horizontale carrée, sont constitués chacun par quatre membrures d'angle (ou montants) réunies deux à deux par une triangulation, appelée aussi contreventement, composée de diagonales et de traverses. En service, les éléments de mât sont disposés verticalement les uns au-dessus des autres, et ils sont reliés rigidement les uns aux autres par leurs membrures d'angle. Les liaisons "bout à bout" réalisées entre ces membrures d'angle doivent assurer la continuité des montants de la tour verticale et la transmission des efforts longitudinaux et transversaux provenant des sollicitations produites par la partie supérieure de la grue.

Les dispositifs d'assemblage démontable connus à ce jour, dans le domaine d'application ici considéré, peuvent être classés en quatre catégories principales.

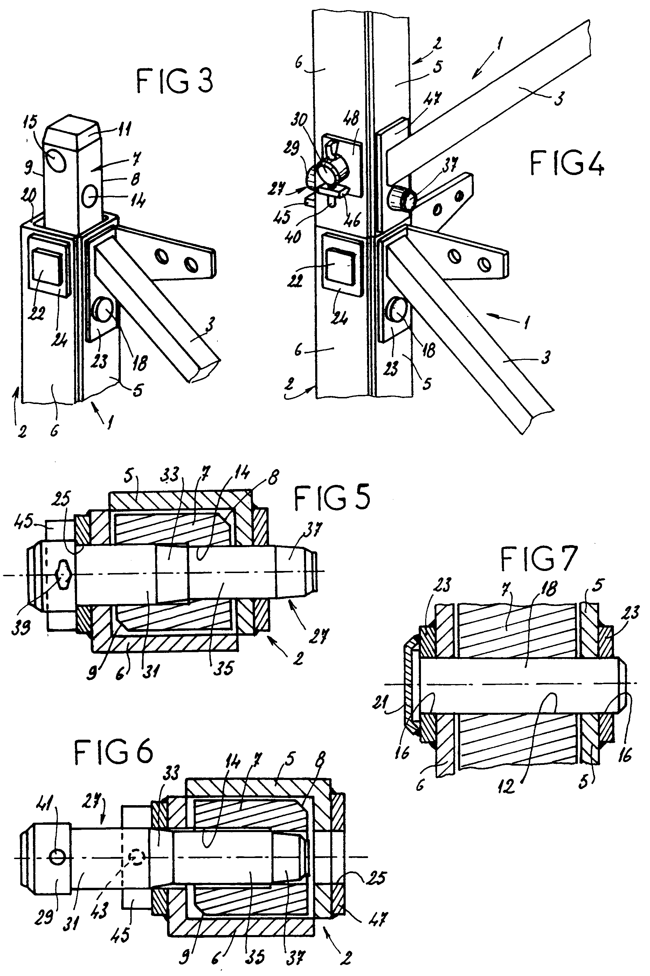

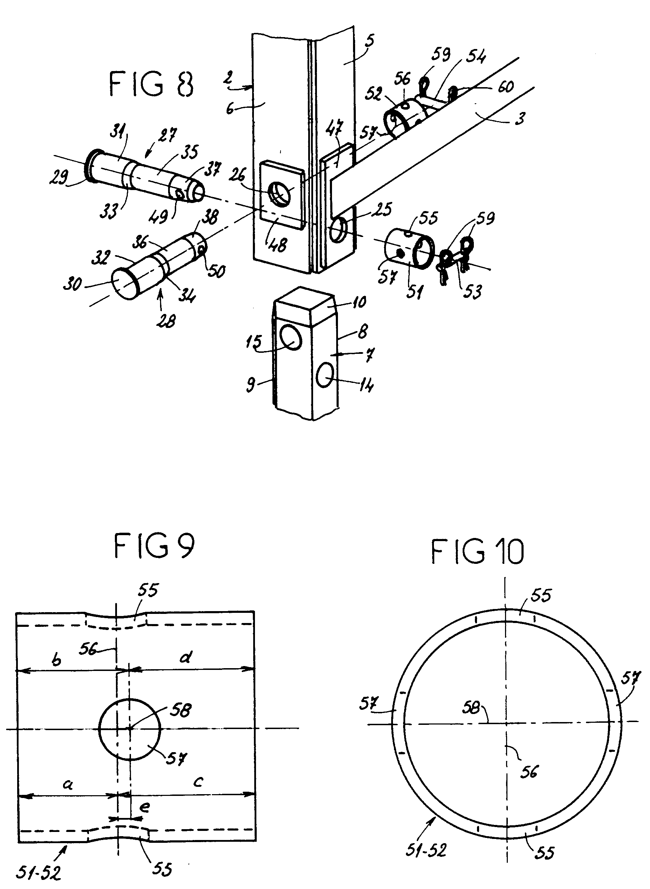

Les dispositifs de la première catégorie utilisent des éclisses intérieures et/ou extérieures, reliées aux extrémités des membrures par des vis ou boulons d'assemblage qui travaillent au cisaillement. En particulier, la demande de brevet français N° 2135024 au nom de la Demanderesse montre aux figures 9, 10 et 12 un dispositif comprenant une éclisse intérieure de section transversale sensiblement conforme à la section intérieure creuse des membrures, formées par assemblage de deux cornières, et des vis transversales d'assemblage, traversant chacune un alésage transversal de l'éclisse intérieure et des alésages opposés ménagés coaxialement dans la membrure correspondante, l'éclisse intérieure étant ainsi fixée sur chaque membrure au moyen de deux vis orthogonales l'une à l'autre, et décalées l'une par rapport à l'autre dans la direction longitudinale de l'éclisse intérieure. Dans la mesure où les corps des vis d'assemblage peuvent être assimilées à des axes de liaison, ce document représente un état de la technique correspondant au préambule de la revendication 1. Dans un tel dispositif connu, les vis ou boulons doivent être montés sans jeu, ce qui nécessite une grande précision dimensionnelle dans l'entraxe des trous traversés par ces boulons et dans les diamètres de perçage de ces trous. La mise en place des boulons est longue et souvent délicate, et l'assemblage se détériore rapidement au cours de ses montages et démontages fréquents. Un dispositif partiellement comparable, comportant des axes de liaison formés par des broches, est aussi décrit dans le brevet français N° 1436649, avec des broches soit toutes parallèles entre elles (figure 5), soit orthogonales entre elles (figure 7).

Les dispositifs d'assemblage de la deuxième catégorie utilisent des brides intérieures ou extérieures, situées aux extrémités des membrures et reliées par des boulons qui travaillent à la traction. Ces boulons doivent être du type dit à "haute résistance" et être montés avec un serrage contrôlé, de telle façon que les membrures assemblées restent en contact quel que soit l'effort de traction s'exerçant longitudinalement, et que l'effort maximal résultant dans le boulon reste toujours inférieur à la limite de déformation élastique du boulon. Dans ce type de réalisation, les efforts tranchants s'exerçant transversalement doivent être transmis au niveau du joint d'une membrure à l'autre, soit par adhérence ce qui nécessite d'augmenter la précontrainte dans le serrage des boulons, soit par contact au travers d'organes de centrage ou d'organes d'emboîtement, ce qui demande une grande précision dans le positionnement desdits organes lors de la fabrication du joint.

Les dispositifs de la troisième catégorie utilisent des éléments d'assemblage de formes complémentaires, fixés aux extrémités de chaque membrure et destinés à s'emboîter l'un dans l'autre en ménageant entre eux un évidement pour la mise en place d'un organe de liaison, tel que coin, clavette, etc..., ou à se superposer l'un à l'autre pour former un insert d'accouplement solidarisé par un élément extérieur démontable en deux parties, tel qu'anneau, noix de verrouillage, etc... Ce type de réalisation mécanique s'accommode assez mal à une charpente métallique, du fait des tolérances habituelles sur les dimensions des profils des membrures de ladite charpente.

Enfin, les dispositifs d'assemblage de la quatrième catégorie, utilisent des éclisses et des broches. Selon un premier type, adapté aux profils de membrures ouverts tels que profils en cornière et décrit par exemple dans le brevet français N° 2 185 217 au nom de la Demanderesse, le dispositif d'assemblage comprend une éclisse intérieure et deux éclisses extérieures sur le montant inférieur, deux renforts intérieurs et deux renforts extérieurs sur le montant supérieur, et deux axes orthogonaux décalés l'un par rapport à l'autre dans le sens vertical. Selon un deuxième type, adapté aux profils de membrures creux et décrit par exemple dans le brevet allemand N° 2 351 177 (équivalent du brevet français N° 2 247 417), le dispositif d'assemblage comprend une éclisse intérieure dont une partie est emmanchée fixement à l'extrémité inférieure du montant creux supérieur, tandis que l'autre partie de l'éclisse, de section transversale plus petite, forme un tenon en saillie vers le bas qui est retenu dans l'extrémité supérieure du montant creux inférieur par l'intermédiaire d'une ou plusieurs broches, constituées chacune d'un manchon extérieur présentant une fente longitudinale pour son élasticité et un alésage conique, et d'un axe conique intérieur complémentaire, avec serrage par un mécanisme vis-écrou. Dans cette dernière réalisation, la rigidité de l'assemblage est obtenue par les manchons élastiques qui exercent une précontrainte dans les alésages du tenon formé par la partie en saillie de l'éclisse intérieure et les alésages de la chape formée par les parois latérales opposées du montant creux inférieur. Ce type de réalisation pose deux problèmes, qui sont d'une part la détermination du couple de serrage du mécanisme vis-écrou nécessaire pour obtenir une précontrainte déterminée, et d'autre part le maintien de cette précontrainte dans le temps. Par ailleurs, en cas de pluralité de broches, celles-ci sont toutes prévues parallèles entre elles si bien qu'elles ne sont guère adaptées pour la transmission correcte d'efforts transversaux pouvant se développer suivant des directions variables.

La présente invention remédie aux inconvénients exposés ci-dessus, en fournissant un dispositif d'assemblage démontable pour éléments de charpente métallique, notamment pour éléments de mât de grue à tour, présentant des caractéristiques garantissant la continuité des montants, la transmission des efforts longitudinaux et transversaux, et le montage et démontage dans des conditions satisfaisantes, cette invention s'appliquant plus particulièrement à des éléments de charpente avec membrures ou montants de section creuse, sensiblement carrée ou rectangulaire, constitués chacun de deux cornières réunies suivant leurs bords respectifs.

A cet effet, le dispositif d'assemblage démontable selon l'invention, réalisant l'assemblage bout à bout de membrures de section creuse appartenant à deux éléments de charpente, notamment deux éléments de mât superposables d'une grue à tour, comprend de façon connue (par le document FR-A-2135024) une éclisse intérieure de section transversale sensiblement conforme à la section intérieure des membrures, et des organes transversaux d'assemblage de l'éclisse intérieure avec les deux membrures à assembler, celles-ci ayant leurs extrémités respectives en contact, chaque organe d'assemblage étant constitué sous la forme d'un axe de liaison pourvu de moyens d'immobilisation en translation et éventuellement en rotation, qui traverse un alésage transversal de l'éclisse intérieure et des alésages opposés ménagés coaxialement dans la membrure correspondante, l'éclisse intérieure étant fixée à l'une des membrures par une première paire d'axes de liaison orthogonaux l'un à l'autre et décalés l'un par rapport à l'autre dans la direction longitudinale de l'éclisse intérieure, et étant fixée à l'autre membrure par une seconde paire d'axes de liaison orthogonaux l'un à l'autre et décalés l'un par rapport à l'autre dans la direction longitudinale de l'éclisse intérieure, cette éclisse intérieure présentant deux paires d'alésages transversaux orthogonaux l'un à l'autre prévus pour être traversés respectivement par les deux paires d'axes de liaison ; ce dispositif est caractérisé en ce que la partie inférieure de l'éclisse intérieure est fixée à une membrure inférieure par deux axes de liaison orthogonaux l'un à l'autre, ayant chacun un seul diamètre, et en ce que la partie supérieure de l'éclisse intérieure est fixée à une membrure supérieure par deux axes de liaison orthogonaux l'un à l'autre, ayant chacun deux parties de diamètres distincts mais peu différents l'un de l'autre.

Selon une caractéristique complémentaire, les deux axes de liaison orthogonaux l'un à l'autre, fixant la partie inférieure de l'éclisse intérieure, ont une extrémité ou tête maintenue par une plaque d'arrêt, prévue pour être soudée sur un plat de matage lui-même préalablement soudé à l'extérieur de la membrure inférieure, au niveau d'un alésage de cette membrure traversé par l'axe de liaison considéré.

Selon une autre caractéristique, les deux parties de diamètres distincts des deux axes de liaison orthogonaux l'un à l'autre, fixant la partie supérieure de l'éclisse intérieure, sont raccordées par une zone intermédiaire de diamètre progressif, telle qu'une zone de raccordement tronconique, au moins une extrémité de chaque axe de liaison étant associée à des moyens aptes à assurer son immobilisation en translation, et éventuellement en rotation d'une manière non permanente. Selon une première forme d'exécution, ces moyens comprennent, pour chacun des deux axes de liaison orthogonaux l'un à l'autre, un orifice percé diamétralement dans sa partie de plus fort diamètre, notamment dans une tête de l'axe, pour le passage d'une broche d'immobilisation dudit axe en translation et en rotation, la broche traversant aussi un trou percé dans un plat d'arrêt soudé par l'intermédiaire d'un plat de matage à l'extérieur de la membrure supérieure, à proximité d'un alésage de cette membrure traversé par l'axe considéré. Selon une deuxième forme d'exécution, lesdits moyens n'assurent que l'immobilisation en translation de chacun des deux axes de liaison orthogonaux l'un à l'autre, et ils comprennent, pour chacun de ces axes, un perçage diamétral dans la partie de plus petit diamètre de l'axe, notamment sa partie terminale, et une douille d'arrêt montée autour de cette partie de l'axe et retenue axialement sur celle-ci par une goupille traversant une paire de trous opposés de la douille et le perçage précité. Avantageusement, la douille possède pour le passage de la goupille au moins deux paires de trous, percés suivant des axes diamétraux décalés axialement et angulairement, et situés de préférence à des distances différentes des deux extrémités de la douille. Ainsi, en combinant les deux sens possibles de montage de la douille sur l'axe de liaison à immobiliser, et le choix entre au moins deux paires de trous pour le passage de la goupille, on obtient au total au moins quatre réglages distincts pour l'immobilisation en translation de chaque axe de liaison, ce qui permet d'accepter les tolérances habituelles sur les dimensions des membrures d'angle réalisées à partir de cornières.

Selon un mode de réalisation préféré de l'invention, applicable précisément à l'assemblage bout à bout de deux membrures creuses réalisées à partir de cornières et présentant une section creuse sensiblement carrée, l'éclisse intérieure possède elle-même une section transversale de forme générale carrée, et elle comporte deux chanfreins longitudinaux diagonalement opposés prévus pour prendre place respectivement dans les angles intérieurs arrondis des deux cornières formant ensemble chacune des membrures à assembler, d'autres chanfreins étant formés aux extrémités de l'éclisse pour faciliter son introduction dans lesdites membrures.

Naturellement, les entraxes des alésages de l'éclisse intérieure sont déterminés de telle sorte que deux alésages orthogonaux l'un à l'autre ne se coupent pas, étant donné que chacun de ces alésages reçoit un axe de liaison de même diamètre. De plus, ces entraxes sont déterminés de telle façon que les extrémités en regard des deux membrures à assembler soient amenées en contact lorsque le dispositif d'assemblage est mis en place par introduction des deux paires d'axes de liaison orthogonaux dans les alésages correspondants de l'éclisse et de ces membrures.

Le dispositif d'assemblage ainsi conçu est particulièrement adapté pour un montage préalable en usine, en ce qui concerne la fixation permanente de l'éclisse à l'extrémité supérieure d'une membrure par la première paire d'axes orthogonaux à un seul diamètre, et pour un montage ultérieur sur le chantier d'utilisation de la grue, en ce qui concerne la fixation démontable de l'éclisse à l'extrémité inférieure d'une autre membrure, superposée à la précédente, par la seconde paire d'axes orthogonaux. Le montage sur le chantier est facilité par le fait que ces derniers axes sont à deux diamètres, leur emmanchement dans les alésages correspondants étant ainsi rendu aisé.

Dans l'ensemble, l'on obtient ainsi un dispositif d'assemblage démontable pour éléments de charpente métallique, notamment pour éléments de mât de grues à tour, dont la continuité est assurée simultanément par le contact des extrémités en regard des membrures assemblées et par la présence de l'éclisse intérieure, et avec lequel la transmission des efforts longitudinaux et transversaux provenant des sollicitations produites par la partie supérieure de la grue est assurée par contact direct desdites extrémités pour les efforts de compression, par cisaillement des axes de liaison pour les efforts de traction, et par cisaillement de l'un ou l'autre de ces axes de liaison, disposés orthogonalement, pour les efforts transversaux. De plus, le dispositif d'assemblage proposé possède une bonne tenue à la fatigue et aux chocs, et par ailleurs un traitement de surface approprié de l'éclisse, des axes de liaison et des autres organes accessoires assure sa protection efficace contre la corrosion. Enfin, ce dispositif d'assemblage possède l'avantage de ne comporter aucun boulon ou autre organe de vissage, si bien que son montage et son démontage sont rapides et aisés, et qu'il n'existe aucun risque de grippage pouvant rendre l'assemblage indémontable.

De toute façon, l'invention sera mieux comprise à l'aide de la description qui suit, en référence au dessin schématique annexé représentant, à titre d'exemples non limitatifs, deux formes d'exécution de ce dispositif d'assemblage démontable pour éléments de charpente métallique :
Figure 1 est une vue en perspective montrant deux éléments de mât d'une grue à tour, assemblés par des dispositifs conformes à la présente invention ;
Figure 2 illustre, en perspective éclatée, les éléments du dispositif selon l'invention avant tout assemblage ;
Figure 3 montre une partie des éléments de la figure 2, tels qu'ils sont pré-montés en usine ;
Figure 4 est une vue en perspective similaire aux figures 2 et 3, illustrant l'assemblage entièrement réalisé ;
Figures 5 et 6 sont des vues en coupe horizontale de ce dispositif d'assemblage, passant par l'un des axes et illustrant deux phases d'emmanchement de ces axes ;
Figure 7 est une vue en coupe d'un détail de ce dispositif d'assemblage ;
Figure 8 est une vue en perspective éclatée, montrant une variante du dispositif d'assemblage selon l'invention ;
Figures 9 et 10 sont des vues, respectivement de côté et en bout, d'une douille d'arrêt d'axe intervenant dans la variante selon la figure 8.

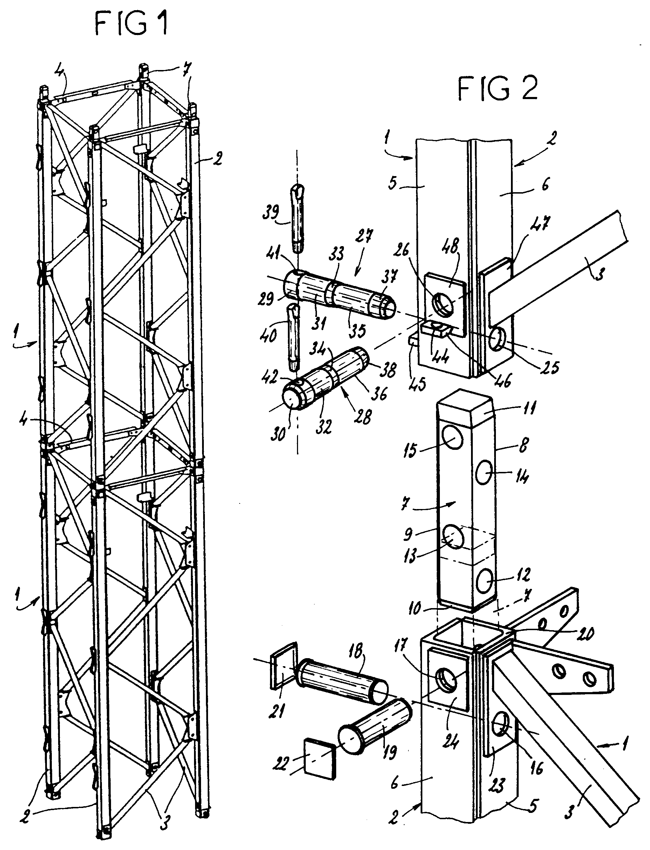

La figure 1 montre deux éléments 1 consécutifs, superposés, appartenant à un mât de grue à tour. Chaque élément de mât 1 présente une section horizontale de forme générale carrée, et il comprend quatre membrures d'angle ou montants 2, disposés verticalement et réunis par une triangulation composée de diagonales 3 et de traverses horizontales 4 fixes ou démontables. Chaque montant 2 est formé par deux cornières 5 et 6 réunies suivant leurs bords respectifs, comme le montrent aussi les figures 2 à 7, de manière à constituer un profilé tubulaire de section horizontale sensiblement carrée, dont l'orientation est similaire à celle de la section carrée du mât.

Les montants 2, présentant ainsi des extrémités supérieures et inférieures ouvertes, sont assemblés au moyen d'éclisses intérieures 7 appartenant au dispositif d'assemblage démontable objet de l'invention. On a représenté sur la figure 1, à l'extrémité supérieure des montants 2 de l'élément de mât 1 supérieur, les éclisses 7 en position emmanchée dans ces montants 2, telles que prémontées en usine comme on le précisera plus bas.

En se référant aux figures 2, 3, 5 et 6, chaque éclisse intérieure 7 utilisée en position verticale possède elle-même une section horizontale de forme générale carrée. L'éclisse 7 comporte deux chanfreins longitudinaux 8 et 9, diagonalement opposés, qui prennent place respectivement dans les angles intérieurs arrondis des deux cornières 5 et 6 formant les montants 2. D'autres chanfreins transversaux 10 et 11 sont prévus, respectivement, aux extrémités inférieure et supérieure de chaque éclisse 7, pour faciliter l'introduction de celle-ci dans les montants 2. On distinguera, dans la suite de l'exposé, la partie inférieure et la partie supérieure de l'éclisse 7.

La partie inférieure de l'éclisse intérieure 7, prévue pour être montée en usine à l'intérieur de l'extrémité supérieure d'un montant 2, comporte deux alésages 12 et 13 identiques superposés, mais réalisés suivant deux directions horizontales orthogonales l'une à l'autre. L'alésage inférieur 12 s'étend ainsi perpendiculairement à deux faces verticales opposées de l'éclisse 7, d'une face à l'autre, tandis que l'alésage supérieur 13 s'étend entre les deux autres faces verticales opposées de cette éclisse 7, également d'une face à l'autre. Les deux alésages 12 et 13 possèdent un seul et même diamètre, et leurs axes géométriques sont décalés, l'un par rapport à l'autre, d'une hauteur supérieure à leur diamètre, de sorte que ces deux alésages 12 et 13 ne se coupent pas.

D'une façon analogue, la partie supérieure de l'éclisse intérieure 7, qui est prévue pour être montée sur le chantier à l'intérieur de l'extrémité inférieure d'un montant 2, comporte deux alésages 14 et 15 identiques superposés, réalisés suivant deux directions horizontales orthogonales l'une à l'autre. L'alésage inférieur 14 s'étend perpendiculairement à deux faces verticales opposées de l'éclisse 7, d'une face à l'autre, et l'alésage supérieur 15 s'étend entre les deux autres faces verticales superposées de cette éclisse 7, aussi d'une face à l'autre. Les axes géométriques des deux alésages 14 et 15 sont également décalés, l'un par rapport à l'autre, d'une hauteur supérieure au diamètre de ces alésages. Comme le montrent les figures 5 et 6, chacun des alésages 14 et 15 possède deux parties successives, de diamètres légèrement distincts, séparées l'une de l'autre par un épaulement annulaire intérieur.

L'extrémité supérieure de chaque montant 2 d'un élément de mât 1 comporte deux doubles alésages 16 et 17, ménagés dans les cornières 5 et 6. Les alésages 16 et 17 sont réalisés perpendiculairement aux faces latérales extérieures du montant 1, avec des diamètres égaux entre eux et à celui des alésages 12 et 13 de la partie inférieure de l'éclisse 7, ces alésages 16 et 17 étant disposés de telle façon que leurs axes géométriques coïncident avec les axes géométriques des alésages 12 et 13 de l'éclisse 7, lorsque la partie inférieure de cette éclisse est positionnée à l'intérieur de l'extrémité supérieure du montant 2. La liaison entre la partie inférieure de l'éclisse 7 et l'extrémité supérieure du montant 2 est réalisée en usine au moyen de deux axes 18 et 19, d'un seul et même diamètre correspondant à celui des alésages 12 et 13 de l'éclisse 7 donc, aussi, à celui des alésages 16 et 17 du montant 1.

Le montage de l'éclisse 7 est réalisé de la façon suivante : l'éclisse 7 est engagée par sa partie inférieure à l'intérieur de l'extrémité supérieure ouverte du montant 2, en étant orientée de telle sorte que ses chanfreins longitudinaux 8 et 9 prennent place dans les angles intérieurs des deux cornières 5 et 6. Cette éclisse 7 est enfoncée jusqu'à ce que ses alésages 12 et 13 se positionnent en face des alésages 16 et 17 du montant 1, et l'on introduit alors les deux axes de liaison 18 et 19 au travers de ces alésages ; plus particulièrement, l'axe inférieur 18 traverse l'alésage 12 de l'éclisse 7 et la paire d'alésages 16 du montant 2, tandis que l'axe supérieur 19, orthogonal à l'axe inférieur 18, traverse l'alésage 13 de l'éclisse 7 et la paire d'alésages 17 du montant 2. La figure 3 montre les éléments de l'assemblage, tels qu'ils sont ainsi pré-montés en usine, seule la partie supérieure de l'éclisse 7 étant alors visible et formant une sorte de tenon, dépassant la face supérieure 20 du montant 2 d'une hauteur sensiblement égale à la moitié de la longueur de l'éclisse 7.

Pour éviter que les axes 18 et 19 se déplacent, ceux-ci sont maintenus à une extrémité par une plaque d'arrêt d'axe, respectivement 21 et 22, montée fixement. En position montée, la plaque d'arrêt 21 ou 22 de chaque axe 18 ou 19 est soudée au montant 2 par l'intermédiaire d'un plat de matage, respectivement 23 ou 24, lui-même soudé primitivement autour d'un alésage 16 ou 17, sur une face extérieure du montant 2. Comme l'illustre la figure 7, dans un mode de réalisation particulier, les axes 18 et 19 possèdent une tête réduite, qui est emprisonnée au montage en usine par une plaque d'arrêt 21, 22 par exemple carrée, ayant une forme en creux résultant de bords pliés, ces bords étant soudés au montant 2 par l'intermédiaire des plats de matage 23,24. Dans cette version, les axes 18 et 19 sont seulement immobilisés en translation. Selon une variante, les extrémités des axes 18 et 19 sont soudées aux plaques d'arrêt respectives 21,22, elles-mêmes soudées sur les plats de matage 23,24, ce qui assure en outre l'immobilisation en rotation desdits axes 18 et 19.

L'extrémité inférieure de chaque montant 2 d'un élément de mât 1 comporte également deux doubles alésages 25 et 26, ménagés dans les cornières 5 et 6 perpendiculairement aux faces latérales dudit montant 2. Ces doubles alésages 25 et 26 sont disposés de telle façon que leurs axes géométriques coïncident avec les axes géométriques des alésages 14 et 15 de la partie supérieure de l'éclisse 7 lorsque celle-ci est positionnée à l'intérieur de l'extrémité inférieure du montant 1.

Les diamètres des doubles alésages 25 et 26 de l'extrémité inférieure du montant 2 correspondent aux diamètres des alésages 14 et 15 de la partie supérieure de l'éclisse 7. Plus particulièrement, comme l'illustrent les figures 5 et 6, chaque double alésage 25 ou 26 possède un alésage de plus petit diamètre, correspondant à la partie de plus petit diamètre de l'alésage 14 ou 15 de l'éclisse 7, et un alésage de plus grand diamètre, correspondant à la partie de plus grand diamètre de l'alésage 14 ou 15 de l'éclisse 7.

L'assemblage entre l'éclisse 7 et l'extrémité inférieure du montant 2 est réalisé sur le chantier, au moyen de deux axes de liaison 27 et 28 à deux diamètres, correspondant aux deux diamètres précédemment mentionnés pour les alésages 14,15,25 et 26. Comme le montrent les figures 2, 5 et 6, chaque axe 27 ou 28 comporte successivement, d'une extrémité à l'autre : une tête élargie respectivement 29,30, une partie cylindrique lisse de plus grand diamètre 31,32 correspondant à la partie de plus grand diamètre de l'alésage 14,15, une zone de raccordement tronconique 33,34, une partie cylindrique lisse de plus petit diamètre 35,36 correspondant à la partie de plus petit diamètre de l'alésage 14,15, et une partie terminale tronconique 37,38. La longueur de la partie lisse de plus petit diamètre 35,36, augmentée de la longueur de la zone de raccordement tronconique 33, 34, est du même ordre de grandeur que la longueur de la partie lisse de plus grand diamètre 31, 32, ce qui facilite le montage des axes 27 et 28, la longueur d'emmanchement forcé étant ainsi réduite de plus de moitié, par rapport à la longueur totale de chaque axe 27,28.

L'assemblage est réalisé en emboîtant les extrémités inférieures des montants 2 de l'élément de mât à ajouter 1 sur les parties dépassantes des éclisses 7 situées au sommet de l'élément de mât 1 déjà en place. Lorsque les faces inférieures des montants 2 de l'élément de mât 1 supérieur arrivent en contact avec les faces supérieures 20 des montants 2 de l'élément de mât 1 inférieur, les doubles alésages 25 et 26 de chaque montant sont alignés avec les alésages 14 et 15 de la partie supérieure de l'éclisse 7. Les deux axes de liaison 27 et 28 sont alors introduits dans ces alésages, leur montage étant facilité par leur conformation avec deux diamètres. Pour éviter que ces axes 27 et 28 se déplacent, une fois montés et lorsque la grue est en service, chacun d'eux est bloqué en rotation et en translation par la mise en place d'une broche, respectivement 39,40, introduite au travers d'un orifice 41,42 percé selon une direction diamétrale dans la tête 29,30 de l'axe de liaison 27,28. Chaque broche 39, 40 traverse aussi un trou 43,44 percé dans un plat d'arrêt 45,46 soudé au montant 2 par l'intermédiaire d'un plat de matage 47,48, lui-même soudé primitivement autour d'un alésage 25,26 sur une face extérieure du montant 2. Ces derniers éléments sont bien visibles sur la figure 2, tandis que la figure 4 montre l'assemblage finalement obtenu. On notera qu'au droit de la zone de raccordement tronconique 33,34 de chaque axe 27,28, on obtient dans l'alésage 14,15 une cavité annulaire pouvant constituer une réserve de graisse.

Pour séparer sur le chantier les deux montants 2 réunis comme décrit ci-dessus, on démonte les axes de liaison 27 et 28 après retrait des broches 39 et 40, ce qui autorise le soulèvement du montant 2 appartenant à l'élément de mât 1 supérieur, tandis que l'éclisse intérieure 7 reste en place au sommet du montant 2 appartenant à l'élément de mât 1 inférieur.

On réalise ainsi un dispositif d'assemblage démontable, pour éléments de mât 1 d'une grue à tour, dont la continuité est assurée simultanément par le contact des extrémités en regard des montants 2 et par la présence de l'éclisse intérieure 7. Dans cet assemblage, la transmission des efforts longitudinaux et transversaux, provenant des sollicitations produites par la partie supérieure de la grue, est assurée par contact direct des extrémités des montants 2 pour les efforts de compression, par cisaillement des axes de liaison 18,19,27 et 28 pour les efforts de traction, et par cisaillement de l'un ou l'autre de ces axes orthogonaux entre eux pour les efforts transversaux.

Les figures 8 à 10 illustrent une variante, qui se différencie de la forme de réalisation précédemment décrite en référence aux figures 1 à 7 uniquement par les moyens d'immobilisation des deux axes de liaison orthogonaux 27 et 28, prévus pour réunir la partie supérieure de l'éclisse intérieure 7 à l'extrémité inférieure du montant 2. Ainsi la figure 8 représente seulement de façon partielle le dispositif d'assemblage, en utilisant les mêmes repères pour les parties non modifiées.

Chaque axe de liaison 27 ou 28, à deux diamètres, comporte ici une tête 29,30 plus réduite, tandis que sa partie terminale tronconique 37,38 est pourvue d'un perçage diamétral 49,50. L'immobilisation en translation de chaque axe 27,28 est réalisée au moyen d'une douille d'arrêt d'axe 51,52, elle-même retenue par une goupille d'arrêt 53,54 prévue pour traverser le perçage 49,50.

En se référant aux figures 9 et 10, chaque douille d'arrêt d'axe 51,52 présente une première paire de trous 55, percés suivant un même axe diamétral 56, et une seconde paire de trous 57, percés suivant un autre axe diamétral 58, décalé axialement et angulairement par rapport à l'axe 56. Le décalage axial des deux axes 56 et 58, désigné par e, est de quelques millimètres, et ces deux axes 56 et 58 sont par exemple orthogonaux. De plus, la distance a,b entre chaque axe 56 ou 58 et une extrémité de la douille 51,52 est différente de la distance c,d entre le même axe 56 ou 58 et l'autre extrémité de la douille 51,52, la différence étant de quelques millimètres.

Ainsi, selon le sens de montage de la douille 51,52 sur l'axe de liaison 27,28, et selon le choix de la paire de trous 55,57 utilisée pour le passage de la goupille 53,54, on dispose pour l'immobilisation en translation des axes 27,28 de quatre possibilités, permettant une adaptation dimensionnelle tenant compte des tolérances de fabrication, notamment des dimensions assez variables des cornières 5,6. Après avoir choisi le positionnement de la douille 51,52 et la paire de trous 55,57 à utliser, chaque goupille 53,54 est introduite au travers de cette paire de trous et du perçage 49,50 de l'axe 27,28. Enfin, chaque goupille d'arrêt 53,54 mise en place est elle-même retenue au moyen de deux goupilles de sécurité 59,60, notamment des goupilles de type "bêta" - voir figure 8.

Comme il va de soi, et comme il ressort de ce qui précède, l'invention ne se limite pas aux seules formes d'exécution de ce dispositif d'assemblage démontable pour éléments de charpente métallique qui ont été décrites ci-dessus, à titre d'exemples ; elle en embrasse, au contraire, toutes les variantes de réalisation et d'application respectant le même principe. Ainsi, l'on ne s'éloignerait pas du cadre de l'invention :
- en utilisant une éclisse intérieure de section différente : rectangulaire, circulaire, etc... ;
- en utilisant des axes de liaison de diamètres différents les uns des autres, ou à plusieurs diamètres ;
- en appliquant le même dispositif d'assemblage à des éléments de charpente métallique autres que des éléments de mât de grues à tour, l'invention étant naturellement applicable à toutes structures analogues, telles que des pylônes, des mâts de portiques, etc... ;
- en utilisant ce dispositif d'assemblage seulement pour sa partie supérieure destinée au montage sur le chantier, sachant que le prémontage de la partie inférieure réalisé en usine et non prévu obligatoirement démontable peut être réalisé par d'autres moyens de fixation.

## Revendications

1. Dispositif d'assemblage démontable pour éléments de charpente métallique, réalisant l'assemblage bout à bout de membrures de section creuse appartenant à deux éléments de charpente, notamment deux éléments de mât (1) superposables d'une grue à tour, du type comprenant une éclisse intérieure (7) de section transversale sensiblement conforme à la section intérieure creuse des membrures (2), et des organes transversaux (18,19,27,28) d'assemblage de l'éclisse intérieure avec les deux membrures (2) à assembler, celles-ci ayant leurs extrémités respectives en contact, chaque organe d'assemblage étant constitué sous la forme d'un axe de liaison (18,19,27,28) pourvu de moyens d'immobilisation en translation et éventuellement en rotation (21 à 24 ; 39 à 48 ; 49 à 60), qui traverse un alésage transversal (12,13,14,15) de l'éclisse intérieure (7) et des alésages opposés (16,17,25,26) ménagés coaxialement dans la membrure (2) correspondante, l'éclisse intérieure (7) étant fixée à l'une des membrures (2) par une première paire d'axes de liaison (18,19) orthogonaux l'un à l'autre et décalés l'un par rapport à l'autre dans la direction longitudinale de l'éclisse intérieure (7), et étant fixée à l'autre membrure (2) par une seconde paire d'axes de liaison (27,28) orthogonaux l'un à l'autre et décalés l'un par rapport à l'autre dans la direction longitudinale de l'éclisse intérieure (7), cette éclisse intérieure (7) présentant deux paires d'alésages transversaux (12,13,14,15) orthogonaux l'un à l'autre prévus pour être traversés respectivement par les deux paires d'axes de liaison (18,19,27,28), caractérisé en ce que la partie inférieure de l'éclisse intérieure (7) est fixée à une membrure inférieure (2) par deux axes de liaison (18,19) orthogonaux l'un à l'autre, ayant chacun un seul diamètre, et en ce que la partie supérieure de l'éclisse intérieure (7) est fixée à une membrure supérieure (2) par deux axes de liaison (27,28) orthogonaux l'un à l'autre, ayant chacun deux parties (31,32,35,36) de diamètres distincts mais peu différents l'un de l'autre.

2. Dispositif d'assemblage pour éléments de charpente selon la revendication 1, caractérisé en ce que les deux axes de liaison (18,19) orthogonaux l'un à l'autre, fixant la partie inférieure de l'éclisse intérieure (7), ont une extrémité ou tête maintenue par une plaque d'arrêt (21,22), prévue pour être soudée sur un plat de matage (23,24) lui-même préalablement soudé à l'extérieur de la membrure inférieure (2), au niveau d'un alésage (16,17) de cette membrure (2) traversé par l'axe de liaison (18,19) considéré.

3. Dispositif d'assemblage démontable pour éléments de charpente métallique selon la revendication 1 ou 2, caractérisé en ce que les deux parties (31,32,35,36) de diamètres distincts des deux axes de liaison (27,28) orthogonaux l'un à l'autre, fixant la partie supérieure de l'éclisse supérieure (7), sont raccordées par une zone intermédiaire de diamètre progressif, telle qu'une zone de raccordement tronconique (33,34), au moins une extrémité (29,30,37,38) de chaque axe de liaison (27,28) étant associée à des moyens (39 à 48 ; 49 à 60) aptes à assurer son immobilisation en translation et éventuellement en rotation d'une manière non permanente.

4. Dispositif d'assemblage démontable pour éléments de charpente métallique selon la revendication 3, caractérisé en ce que lesdits moyens comprennent, pour chacun des deux axes de liaison (27,28) orthogonaux l'un à l'autre, un orifice (41,42) percé diamétralement dans sa partie de plus fort diamètre, notamment dans la tête (29,30) de l'axe (27,28), pour le passage d'une broche (39,40) d'immobilisation dudit axe (27,28) en translation et en rotation, la broche (39,40) traversant aussi un trou (43,44) percé dans un plat d'arrêt (45,46) soudé par l'intermédiaire d'un plat de matage (47,48) à l'extérieur de la membrure supérieure (2), à proximité d'un alésage (25,26) de cette membrure (2) traversé par l'axe (27,28) considéré.

5. Dispositif d'assemblage démontable pour éléments de charpente métallique selon la revendication 3, caractérisé en ce que lesdits moyens comprennent, pour chacun des deux axes de liaison (27,28) orthogonaux l'un à l'autre, un perçage diamétral (49,50) dans la partie de plus petit diamètre de l'axe (27,28), notamment sa partie terminale (37,38), et une douille d'arrêt (51,52) montée autour de cette partie (37,38) de l'axe (27,28) et retenue sur celle-ci par une goupille (53,54) traversant une paire de trous opposés (55,57) de la douille (51,52) et le perçage précité (49,50).

6. Dispositif d'assemblage démontable pour éléments de charpente métallique selon la revendication 5, caractérisé en ce que la douille d'arrêt (51,52) possède, pour le passage de la goupille (53,54), au moins deux paires de trous (55,57), percés suivant des axes diamétraux (56,58) décalés axialement (e) et angulairement, et situés de préférence à des distances différentes (a,b,c,d) des deux extrémités de la douille (51,52).

7. Dispositif d'assemblage démontable pour éléments de charpente métallique selon l'une quelconque des revendications 1 à 6, applicable à l'assemblage bout à bout de deux membrures creuses (2) réalisées à partir de cornières (5,6) et présentant une section transversale creuse sensiblement carrée, caractérisé en ce que l'éclisse intérieure (7) possède elle-même une section transversale de forme générale carrée, et en ce qu'elle comporte deux chanfreins longitudinaux (8,9) diagonalement opposés prévus pour prendre place respectivement dans les angles intérieurs arrondis des deux cornières (5,6) formant ensemble chacune des membrures (2) à assembler, d'autres chanfreins (10,11) étant formés aux extrémités de l'éclisse (7).

8. Dispositif d'assemblage démontable pour éléments de charpente métallique selon l'une quelconque des revendications 1 à 7 appliqué à la liaison des membrures d'angle ou montants (2) appartenant à des éléments de mât (1) d'une grue à tour, caractérisé en ce que la fixation de la partie inférieure de l'éclisse intérieure (7) sur l'extrémité supérieure d'une membrure (2) d'un élément de mât inférieur (1) par la première paire d'axes de liaison (18,19) orthogonaux l'un à l'autre est une fixation permanente réalisable en usine, tandis que la fixation de la partie supérieure de l'éclisse intérieure (7) sur l'extrémité inférieure d'une membrure (2) d'un élément de mât supérieur (1) par la seconde paire d'axes de liaison (27,28) est une fixation démontable, réalisable sur un chantier.

## Claims

1. A dismantleable assembly device for metal framework elements, which effects the end-to-end assembly of hollow section limbs forming part of two framework elements, particularly two superimposable tower elements (1) of a tower crane, of the type comprising an internal splice-bar (7) with a cross-section which substantially corresponds to the hollow internal cross-section of the limbs (2), and transverse elements (18,19,27,28) for the assembly of the internal splice-bar with the two limbs (2) to be assembled, the latter having their respective ends in contact, each assembly element being constructed in the form of a connecting stud (18,19,27,28) which is provided with means of immobilisation in translation and optionally in rotation (21 to 24; 39 to 48; 49 to 60) and which passes through a transverse bore (12,13,14,15) in the internal splice-bar (7) and through opposing bores (16,17,25,26) disposed coaxially in the corresponding limb (2), the internal splice-bar (7) being fixed to one of the limbs (2) by a first pair of mutually perpendicular connecting studs (18,19) which are staggered in relation to each other in the longitudinal direction of the internal splice-bar (7) and being fixed to the other limb (2) by a second pair of mutually perpendicular connecting studs (27,28) which are staggered in relation to each other in the longitudinal direction of the internal splice-bar (7), the said internal splice-bar (7) having two pairs of mutually perpendicular transverse bores (12,13,14,15) which are provided for the two respective pairs of connecting studs (18,19,27,28) to pass through, characterised in that the lower part of the internal splice-bar (7) is fixed to a lower limb (2) by two mutually perpendicular connecting studs (18,19), each having one diameter only, and that the upper part of the internal splice-bar (7) is fixed to an upper limb (2) by two mutually perpendicular connecting studs (27,28), each having two parts (31,32,35,36) which have diameters which are distinct but which differ little from each other.

2. A dismantleable assembly device for metal framework elements according to claim 1, characterised in that the two mutually perpendicular connecting studs (18,19) which fix the lower part of the internal splice-bar (7) have an end or head which is held in position by a stop plate (21,22) which is provided for welding to a joining plate (23,24), which itself is previously welded to the outside of the lower limb (2) at the level of a bore (16,17) in the said limb (2) through which the connecting stud (18,19) concerned passes.

3. A dismantleable assembly device for metal framework elements according to claim 1 or 2, characterised in that the two parts (31,32,35,36) of distinct diameters of the two mutually perpendicular connecting studs (27,28) which fix the upper part of the upper splice-bar (7) are connected by an intermediate zone of progressive diameter such as a tapered connecting zone (33,34), at least one end (29,30,37,38) of each connecting stud (27,28) being associated with means (39 to 48; 49 to 60) suitable for ensuring its immobilisation in translation and optionally in rotation in a manner which is not permanent.

4. A dismantleable assembly device for metal framework elements according to claim 3, characterised in that for each of the two mutually perpendicular connecting studs (27,28) the said means comprise a hole (41,42) drilled diametrically in its largest diameter part, particularly in the head (29,30) of the stud (27,28), for the passage of a pin (39,40) which immobilises the said stud (27,28) in translation and in rotation, the pin (39,40) also passing through a hole (43,44) drilled in a stop plate (45,46) which is welded by way of a joining plate (47,48) to the outside of the upper limb (2) in the vicinity of a bore (25,26) in this limb (2) through which the stud (27,28) concerned passes.

5. A dismantleable assembly device for metal framework elements according to claim 3, characterised in that for each of the two mutually perpendicular connecting studs (27,28) the said means comprise a diametral drilling (49,50) in the smallest diameter part of the stud (27,28), particularly its end part (37,38), and a locking bush (51,52) mounted around this part (37,38) of the stud (27,28) and held on the latter by a pin (53,54) passing through a pair of opposing holes (55,57) in the bushing (51,52) and through the aforementioned drilling (49,50).

6. A dismantleable assembly device for metal framework elements according to claim 5, characterised in that the locking bush (51,52) has at least two pairs of holes (55,57) for the passage of the pin (53,54), which are drilled along diametral axes (56,58) which are offset axially (e) and angularly and which are preferably situated at different distances (a,b,c,d) from the two ends of the bush (51,52).

7. A dismantleable assembly device for metal framework elements according to any one of claims 1 to 6, applicable to the end-to-end assembly of two hollow limbs (2) constructed from angle sections (5,6) and having a hollow cross-section which is substantially square, characterised in that the internal splice-bar (7) itself has a generally square cross-section and that it comprises diagonally opposed longitudinal chamfers (8,9) which are provided for positioning in the respective rounded internal angles of the said angle sections (5,6) which together form each of the limbs (2) to be assembled, other chamfers (10,11) being formed at the ends of the splice-bar (7).

8. A dismantleable assembly device for metal framework elements according to any one of claims 1 to 7, applied to the connection of angle limbs or of vertical members (2) forming part of the tower (1) elements of a tower crane, characterised in that the fixing of the lower part of the internal splice-bar (7) on to the upper end of a limb (2) of a lower tower element (1) by the first pair of mutually perpendicular connecting studs (18,19) is a permanent fixing which can be produced in the factory, whilst the fixing of the upper part of the internal splice-bar (7) on to the lower end of a limb (2) of an upper tower (1) element by the second pair of connecting studs (27,28) is a dismantleable fixing which can be produced on site.

## Patentansprüche

1. Lösbare Verbindungsvorrichtung für metallische Gerüstelemente, die einen schrittweisen Zusammenbau von im Querschnitt hohlen, zu zwei Gerüstelementen gehörigen Eckgurten, insbesondere von zwei Elementen eines aufrichtbaren Mastes eines Turmdrehkranes, ermöglichen, mit einem inneren Verbindungsteil, welches einen an den Innenhohlquerschnitt des Eckgurtes (2) angepaßten Querschnitt aufweist und mit Querverbindungsorganen (18, 19, 27, 28) zum Zusammenbau des Verbindungsstückes mit den zwei zusammenzufügenden Eckgurten (2), wobei sich die Enden von letzteren kontaktieren, und jedes Verbindungsmittel in Form eines Verbindungsbolzens (18, 19, 27, 28) mit Mitteln zur Verhinderung von translatorischen und eventuell rotatorischen Bewegungen (21 - 24; 39 - 48; 49 - 60) versehen ist und wobei die Verbindungsbolzen eine Querbohrung (12, 13, 14, 15) des Verbindungsstückes und der der Bohrung gegenüberliegenden in dem Eckgurt koaxial eingefügten Bohrung durchqueren, wobei das Verbindungsstück (7) an einem der Eckgurte (2) durch ein erstes Paar (18, 19) von Verbindungsbolzen, die rechtwinkelig zueinander in Längsrichtung des Verbindungsstückes (7) versetzt sind, und an dem anderen Eckgurt (2) durch ein zweites Paar (27, 28) von rechtwinkelig zueinander in Längsrichtung der Verbindungslasche (7) versetzt angeordneten Verbindungsbolzen festgelegt ist und wobei das Verbindungsstück (7) zwei Paar rechtwinkelig zueinander angeordnete, zur Aufnahme der zwei Paar Verbindungsbolzen (18, 19, 27, 28) vorgesehene Querbohrungen (12, 13, 14, 15) aufweist, **dadurch gekennzeichnet, daß** der untere Teilbereich des Verbindungsstückes (7) an einem unteren Eckgurt durch zwei rechtwinkelig zueinander angeordnete Verbindungsbolzen von einheitlichem Durchmesser festgelegt ist und daß der obere Teilbereich des Verbindungsstückes (7) am oberen Eckgurt (2) durch zwei rechtwinkelig zueinander angeordnete Verbindungsbolzen mit zwei Teilbereichen (31, 32, 35, 36) von unterschiedlichem, aber in der Größe wenig differierenden Durchmesser festgelegt ist.

2. Verbindungsvorrichtung für metallische Gerüstelemente nach Anspruch 1, **dadurch gekennzeichnet, daß** die beiden rechtwinkelig zueinander angeordneten Verbindungsbolzen (18, 19), die den unteren Teilbereich des Verbindungsstückes (7) festlegen, ein Ende oder einen Kopf aufweisen, der durch eine Halteplatte (21, 22), die dazu vorgesehen ist, auf eine Verstärkungsplatte, die ihrerseits zuvor außen an den unteren Eckgurt auf Höhe der Bohrung (16, 17) dieses Eckgurtes, durch die der entsprechende Verbindungsbolzen (18, 19) gesteckt wird, angeschweißt wurde, angeschweißt zu werden, gehalten ist.

3. Lösbare Verbindungsvorrichtung für metallische Gerüstelemente nach Anspruch 1 oder 2, **dadurch gekennzeichnet, daß** die beiden Teilbereiche (31, 32, 35, 36) mit unterschiedlichem Durchmesser der beiden rechtwinkelig zueinander angeordneten Verbindungsbolzen (27, 28), die den oberen Teilbereich des oberen Verbindungsstückes (7) fixieren, miteinander durch eine Zwischenzone von ansteigendem Durchmesser verbunden sind, wie beispielsweise eine kegelstumpfartige Verbindungszone (33, 34), wobei wenigstens ein Ende (29, 30, 37, 38) jedes Verbindungsbolzen (27, 28) mit Mitteln (39 - 48; 49 - 60) versehen ist, die es erlauben, Bewegungen in translatorischer und eventuell in rotatorischer Richtung zeitweise auszuschließen.

4. Lösbare Verbindungsvorrichtung für metallische Gerüstelemente nach Anspruch 3, **dadurch gekennzeichnet, daß** die besagten Mittel für jeden der beiden rechtwinkelig zueinander angeordneten Verbindungsbolzen (27, 28) eine diametral im Bereich seines größten Durchmessers angeordnete Bohrung (41, 42), vorzugsweise im Kopf (29, 30) des Bolzens (27, 28), aufweisen, durch die ein Splint (39, 40) zur Festlegung der besagten Achse (27, 28) in translatorischer und rotatorischer Richtung gesteckt wird, wobei der Splint (39, 40) zusätzlich ein Loch (43, 44) durchquert, welches in eine Halteplatte (45, 46) gebohrt ist, die unter Zwischenschaltung einer Verstärkungsplatte (47, 48) an der Außenseite des oberen Eckgurtes (2) in der Nähe der Durchgangsbohrung (25, 26) des Eckgurtes (2), durch die der Bolzen (27, 28) gesteckt wird, angeschweißt ist.

5. Lösbare Verbindungsvorrichtung für metallische Gerüstelemente nach Anspruch 3, **dadurch gekennzeichnet, daß** die besagten Mittel für jeden der beiden rechtwinkelig zueinander angeordneten Verbindungsbolzen (27, 28) eine im Bereich des kleinsten Durchmessers des Bolzens (27, 28), vorzugsweise in seinem Endbereich (37, 38) angeordnete, diametrale Bohrung (49, 50), und eine Haltebuchse (51, 52) aufweisen, die um den besagten Teilbereich (37, 38) des Bolzens (27, 28) angeordnet ist und auf diesem durch einen Stift (53, 54) gehalten ist, wobei der Stift ein Paar sich gegenüberliegender Löcher (55, 57) der Buchse (51, 52) und die oben angeführte Bohrung (49, 50) durchquert.

6. Lösbare Verbindungsvorrichtung für metallische Gerüstelemente nach Anspruch 5, **dadurch gekennzeichnet, daß** die Haltebuchse (51, 52) für den Durchgang des Stiftes (53, 54) wenigstens zwei Paar Löcher (55, 57) besitzt, die diametralen Achsen folgend rechtwinkelig zueinander in axialer Richtung versetzt gebohrt sind und die vorzugsweise in unterschiedlichen Entfernungen (a, b, c, d) von beiden Enden der Buchse (51, 52) angeordnet sind.

7. Lösbare Verbindungsvorrichtung für metallische Gerüstelemente nach einem der Ansprüche 1 bis 6, verwendbar für den schrittweisen Zusammenbau von zwei hohlen, aus Eckprofilen (5, 6) aufgebauten Gurten, wobei der Hohlquerschnitt im wesentlichen quadratisch ist, **dadurch gekennzeichnet, daß** das innere Verbindungsstück (7) selbst einen im wesentlichen quadratischen Querschnitt aufweist und daß es zwei diagonal gegenüber angeordnete Längsphasen (8, 9) besitzt, die dazu vorgesehen sind, in den inneren abgerundeten Winkeln der zwei Eckprofile (5, 6), die zusammen den zu verbindenden Eckgurt (2) bilden, Platz zu finden, wobei andere Phasen (10, 11) am Ende des Verbindungsstückes (7) angeformt sind.

8. Lösbare Verbindungsvorrichtung für metallische Gerüstelemente nach einem der Ansprüche 1 bis 7, verwendbar für die Verbindung von Winkelgurten oder Stützen (2), wie sie als Elemente von Masten (1) eines Turmdrehkranes Verwendung finden, **dadurch gekennzeichnet, daß** die Befestigung des unteren Teilbereiches des unteren Verbindungsstückes (7) am oberen Ende eines Eckgurtes eines unteren Mastelementes (1) durch ein erstes Paar von rechtwinkelig zueinander angeordneten Verbindungsbolzen (18, 19) eine dauerhafte in einer Fabrik herstellbare Befestigung ist, während die Befestigung des oberen Teilbereiches des Verbindungsstückes (7) am unteren Ende eines Eckgurtes (2) eines oberen Mastelementes (1) durch ein zweites Paar von Verbindungsbolzen (27, 28) eine demontierbare Befestigung ist, die auf einer Baustelle hergestellt werden kann.
